# EUROPEAN PATENT SPECIFICATION

(11) **EP 1 547 335 B1**
(45) Date of publication and mention of the grant of the patent: **23.05.2007**
(21) Application number: 03753188.6
(22) Date of filing: 01.10.2003
(51) Int. Cl.: H04L 29/00

(54) **RULE CREATION FOR COMPUTER APPLICATION SCREENING**
HERSTELLUNG VON REGELN ZUR FILTERUNG VON COMPUTERAPPLIKATIONEN
CREATION DE REGLES POUR LE TRIAGE DES DEMANDES ADRESSEES A UNE APPLICATION SUR ORDINATEUR ET DETECTION D'ERREURS DANS L'APPLICATION

(30) Priority: 02.10.2002 US 415202 P
(43) Date of publication of application: 29.06.2005
(73) Proprietor: Telus Communications Company, Edmonton AB T5J 0N5 (CA)
(72) Inventor: Reiner, Richard, Toronto, Ontario, M5B 1N9 (CA)
(74) Representative: Henningsson, Gunnar
(86) International application number: PCT/CA2003/001507
(87) International publication number: WO 2004/032445

(56) References cited:
- WO-A-03/058450
- GB-A- 2 365 668
- US-A- 6 009 475
- US-A1- 2002 093 527
- US-B1- 6 173 440
- US-B1- 6 311 278
- KROPP N P ET AL: "Automated robustness testing of off-the-shelf software components" FAULT-TOLERANT COMPUTING, 1998. DIGEST OF PAPERS. TWENTY-EIGHTH ANNUAL INTERNATIONAL SYMPOSIUM ON MUNICH, GERMANY 23-25 JUNE 1998, LOS ALAMITOS, CA, USA,IEEE COMPUT. SOC, US, 23 June 1998 (1998-06-23), pages 230-239, XP010291290 ISBN: 0-8186-8470-4

## Description

### BACKGROUND OF THE INVENTION

This invention relates to the facilitation of rule creation for screening requests to a computer application.

In computer networks, information is conventionally transmitted in the form of packets. The information flow is typically in the form of a request made to a computer application and a reply by the application to the request. If the packets arrive from an untrusted source, such as the public Internet, there is a risk that they comprise or contain an illegitimate request to the computer application. Such an illegitimate request may constitute an unauthorised attempt to access proprietary information, an unauthorised attempt to alter information, or an attempt to interfere with the normal operations of the application (a so-called "denial of service attack").

An application on a computer may be shielded from illegitimate requests by a computer firewall which filters packets destined for the application. More particularly, the firewall inspects packets and either passes them to the application or drops them depending upon whether they conform to a set of predefined access rules. Known packet filtering firewalls may apply rules to the packet headers of one or more of the link layer, network layer, and transport layer in order to verify the protocols used.

Another approach to shielding an application from illegitimate requests is to employ a proxy firewall. A proxy firewall acts as the destination for packets arriving through a public network and strips off the overhead from each packet that was used in directing the packet through the public network. With this approach, any attacks using the network overhead of packets are avoided. Known proxy firewalls may also apply rules to verify the application protocol.

Although packet filtering firewalls and proxy firewalls have been effective in screening out many illegitimate requests, successful "attacks" that breach such firewalls still occur. Therefore, there is a need for access rules that allow more effective screening of requests to a computer application.

US6,311,278 to Moran discloses a program which makes a copy of a message sent from a server application toward a client and then parses the message to identify commands, fields, or other user-selectable options for the application: these represent a set of allowable user actions, referred to as an application protocol. This protocol data is then stored in a database accessible to a filter which uses the protocol data to determine whether to filter out a message sent to the server by a client. The allowable set of actions can be augmented with information from other messages sent by the server toward a client. The protocol data may be stored on a session by session basis, that is, a set of allowable actions may be stored in association with data identifying a client, in which case the protocol data is used by the filter module to enforce a protocol policy for each individual client/server session.

GB2,365,668 to IBM discloses a manner of classifying a packet using a classification tree. From the root node, the packet data is successively passed to each child node of the root node until a given child node indicates satisfaction of its node criteria. The packet data is then successively passed to each child node of the given node until a node indicates satisfaction of its node criteria, and so on. Once the packet data completes its traversal of the tree, or can progress no further in the tree, the packet has been classified. The classification of the packet data may be used to enforce a site policy, such as a security policy.

### SUMMARY OF INVENTION

To facilitate the creation of rules for screening application layer requests to a computer application, a sample space of application layer requests is grouped according to one or more grouping criteria. Each grouping criterion may be a feature of application layer requests such that each grouping contains application layer requests with a common feature. For example, where the application layer requests follow the hyper-text transport protocol (HTTP), a common feature for some groupings could be a common URI pathname extension.

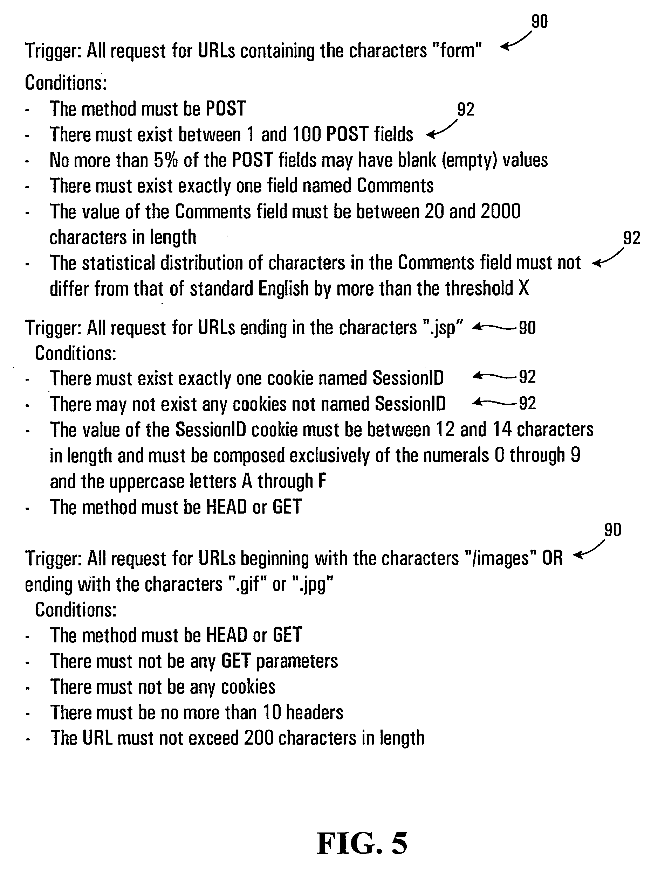

According to the present invention, there is provided a method for creating rule sets for screening application layer requests wherein application layer requests (10, 10', 10") from a sample space of application layer requests are grouped by a feature of said requests: characterised by: receiving a set of data templates (54a, 54b, 54c) applicable to each type of constituent (12, 14, 16, 18, 20, 12', 14', 16', 18', 20', 25', 12", 14", 16", 18", 25", 18a"', 25"') of said requests; obtaining a rule set (Fig. 5) for each requests grouping by: for each type of constituent of said requests, identifying names (24', 24") and associated data elements (26', 26") found in requests of said each requests grouping; for each name: obtaining a sample group of data elements, each data element associated with an instance of said each name; matching said sample group of data elements with a pre-defined data element template; and binding a rule (92) associated with said matching data template to said each name.

According to another aspect of the invention, there is provided a system for creating a rule set for screening application layer requests, comprising: means for grouping application layer requests (10, 10', 10") from a sample space of application layer requests by a feature of said requests; characterised by: means for receiving a set of data templates (54a, 54b, 54c) applicable to each type of constituent (12, 14, 16, 18, 20, 12', 14', 16', 18', 20', 25', 12", 14", 16", 18", 25", 18a"', 25"') of said requests; means for obtaining a rule set (Fig. 5) for each requests grouping by: for each type of constituent of said requests, identifying names (24', 24") and associated data elements (26', 26") found in requests of said each requests grouping; for each name: obtaining a sample group of data elements, each data element associated with an instance of said each name; matching said sample group of data elements with a pre-defined data element template; and binding a rule (92) associated with said matching data template to said each name.

Related systems and computer readable media are also provided.

Other features and advantages will become apparent after a review of the following description in conjunction with the drawings.

### BRIEF DESCRIPTION OF THE DRAWINGS

In the figures which describe example embodiments of the invention,
**figures 1A, 1B, 1C, and 1D** illustrate the contents of example HTTP requests,
**figure 2** is an example of a portion of a rule template in accordance with this invention in human readable form,
**figure 3** is a schematic view of a system employing embodiments of this invention,
**figure 4** is a flow diagram illustrating operation of a portion the system of figure **3**, and
**figure 5** is an example of a portion of a rule set in accordance with this invention in human readable form.

### DETAILED DESCRIPTION

Packets transmitted across the Internet comprise a top level link layer, a mid-level network layer, a lower level transport layer, and a low level application layer. Each of the higher layers is, in essence, a packet. Thus, the link layer is a packet with a header and data that comprises a network layer packet and the network layer packet has a header and data that comprises a transport layer packet. The header of the link layer almost invariably indicates that the protocol followed by the packet is the Internet Protocol (IP) (older protocols being now substantially obsolete and/or not in use on the Internet). Where the packet is an IP packet, the network layer is known as an IP datagram. The header of the transport layer will indicate the transport protocol, the Transport Control Protocol (TCP) of the IP being by far the most common transport protocol as it is used for web browsing, e-mail, and web services. (As will be appreciated by those skilled in the art, web services are machine-to-machine interactions whereby one application may make requests of another application).

The data of a transport layer packet comprises the application layer (which is typically distributed across a number of transport layer packets). The port number at the transport layer, and/or the context, indicates the application layer protocol. Where the transport protocol is TCP, while the application layer protocol may be any of various application layer protocols, the most important are hyper-text transfer protocol (HTTP), secure HTTP (HTTPS), file transfer protocol (FTP), and simple mail transfer protocol (SMTP).

Known packet filtering firewalls may apply rules to the packet headers of one or more of the link layer, network layer, and transport layer in order to verify the protocols used. Known proxy firewalls may verify the application protocol. Each rule applied by known packet filtering firewalls and proxy firewalls has a form that may be termed "simple universal". By way of explanation, a rule specifies a type of element to which it applies. The rule is a simple universal rule if it applies to all elements of the type specified by the rule. As an example, in the rule "All packets must be addressed to destination port number 80", the element to which the rule applies is a packet. And, since this rule applies to all packets, it is a simple universal rule.

Currently, HTTP (or HTTPS) is used for web browsing and web services. An HTTP request has the following general form:
<Method> <URI> <HTTP version>
<HTTP headers with embedded cookies>
<body of request>
where "URI" denotes Universal Resource Identifier. The URI is a link to an entity on the web and is commonly a Universal Resource Locator (URL). The URI also includes any URI parameters, which are also known as GET fields. There may be zero or more headers and zero or more cookies in the HTTP request. The body is optional and, if present, may have a URI-encoded format, a form multi-part encoded format, a Simple Object Access Protocol (SOAP) format, or the body may have unstructured content. A body having a URI encoded format or a form multi-part encoded format is written in hyper-text mark-up language (HTML) or extensible HTML (XHTML). A body having a SOAP format is written in extensible mark-up language (XML).

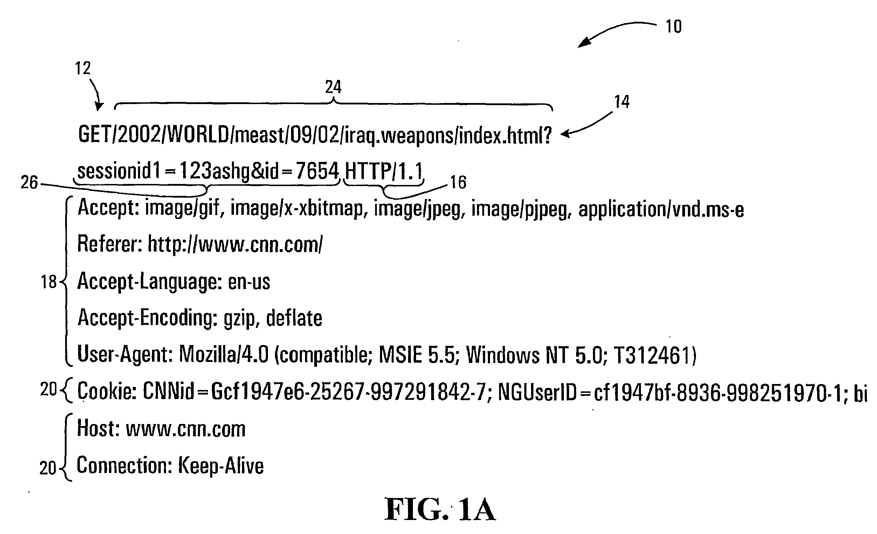

By way of example, turning to figure **1A,** an HTTP request **10** has the following constituents: a GET Method **12,** a URI **14,** an HTTP version indicator **16,** and headers **18** with embedded cookies **20.** This particular HTTP request has no body. The URI is comprised of URL **24** and URI parameter **26.**

As will be apparent from **figure 1A,** a URI parameter **26** has the format "name" = "value" (the example HTTP request **10** having two URI parameters). As is typical, the URI parameters identify the user's current session. The headers **18** have the format "name":"value". Each cookie has an embedded name and value-pair, with each pair being separated by a colon. Thus, cookies **20** have the format: "Cookie":"name1 = "value1"; "name2" = "value2"; "name3" = "value3"...

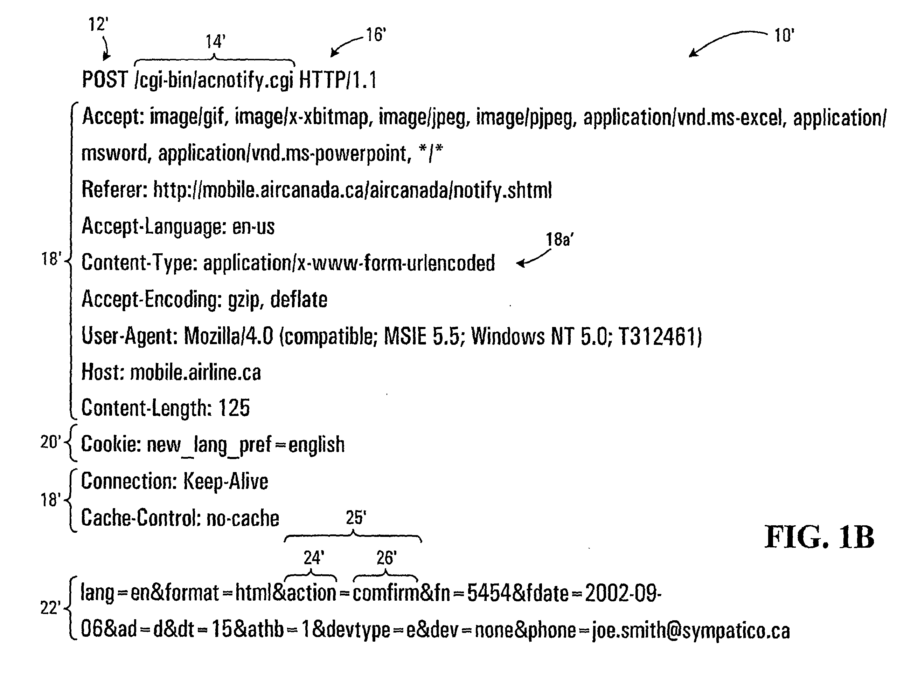

**Figure 1B** illustrates a second example HTTP request **10'** with a POST Method **12'**, a URI **14'** having no URI parameters, an HTTP version indicator **16'**, and headers **18'** with an embedded cookie **20'**. HTTP request **10'** also has a body **22'.** The body is comprised of fields **25',** each having a name **24'** and value **26'** pair. Header **18a'** of the request **10'** indicates that the body **22'** has a URL-encoded format, consequently, the name-value pairs are of the form "name" = "value", with each pair being separated by an ampersand.

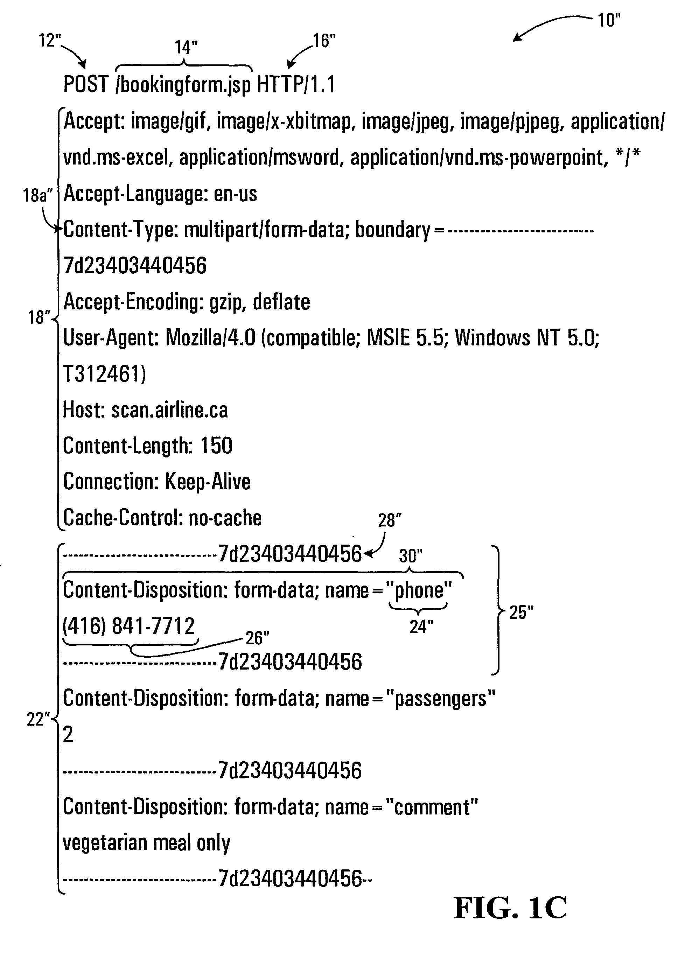

The example HTTP request **10"** of **figure 1C** has the following constituents: a Method **12",** URI **14",** HTTP version indicator **16",** headers **18",** and fields **25"** of body **22".** It will be noted that there are no cookies embedded in the headers. Header **18a"** indicates that the body **22"** has a multi-part form encoded format. With a multi-part form format, the fields of the body are known as parts. Header **18a"** specifies a part boundary **28"** which delineates each part. A part boundary is followed by one or more headers **30"** incorporating the name **24"** of the data field, followed by the field value **26".**

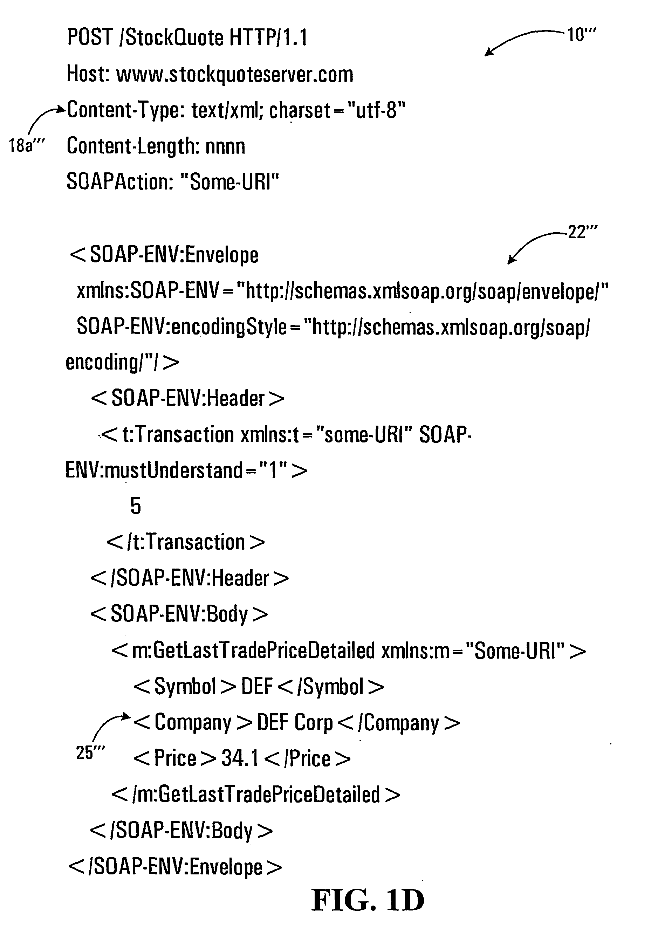

The example HTTP request **10"'** of **figure 1D** has a header **18a"'** indicating the body **22'"** has a SOAP format, such that the constituent elements **25"'** of the body comprise XML elements, their attributes, and data objects according to the specification of the SOAP message format.

There is a possibility of an illegitimate request generator (which may be a human hacker or a machine) employing constituents of the actual payload data (the application layer) of a packet in launching an attack on an application. Thus, an attack could use constituents of an HTTP request. To frustrate such attacks, it is contemplated to create screening rules to constituents of each HTTP request.

The approach to the creation of HTTP screening rules is to initially consider the nature of the computer application, or applications, that are to be protected by the screening rules. A rule developer may have only general knowledge of common types of applications. Or the developer may have knowledge of the general domain of the application(s) to be screened. Or the developer may have specific knowledge of the application(s). Knowledge of the nature of the data elements in applications (or in a type of application) may be gained from the functional specifications for these (or sample ones of these) applications; based on this nature, rule templates may be written. Thus, where the rule developer is working from general knowledge of common types of applications, he/she may write rule templates for commonly found data elements. Where the rule developer is working with knowledge of the general domain of the application(s) to be screened, he/she may write rule templates for domain-specific data elements. And where the rule developer is working with knowledge of the specific application(s) to be screened, he/she may write rule templates for application-specific data elements.

For example, web applications involving on-line shopping or a registration process inevitably at some point serve up a form for a user to fill out and submit. A filled out form will be embodied in a request to the application in URL-encoded format or multi-part form encoded format. The fields of the body will have name data, address data, zip code (or postal code) data, and typically a telephone number. The data elements of these fields may be considered to be commonly found data elements.

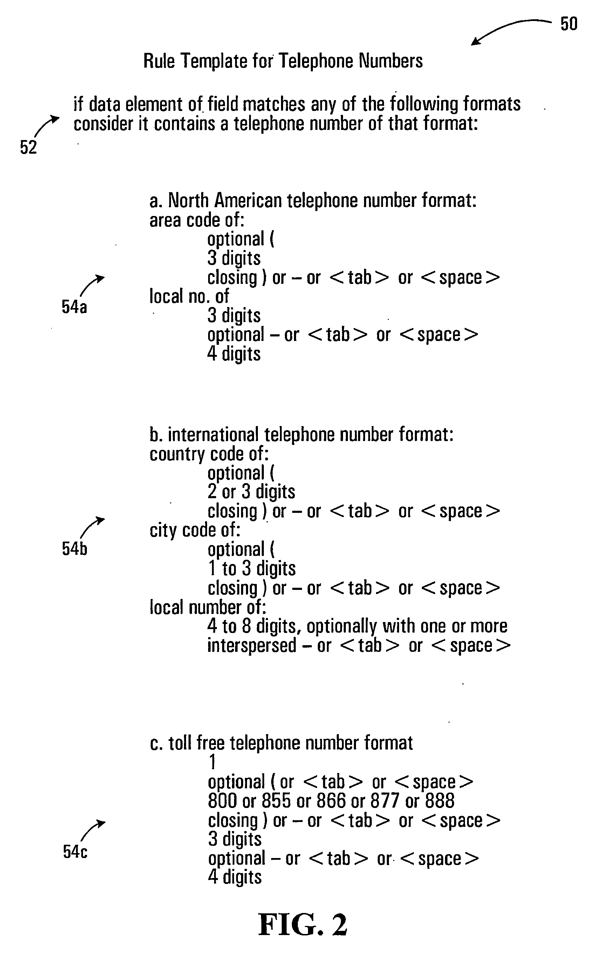

Taking a telephone number as an example, the rule developer may write a rule template for fields containing such numbers. A sample of such a rule template, written in human readable form, is illustrated out in **figure 2**. (In practice, rule templates will be written more symbolically, such as by using a pattern language known as Regular Expressions.) Turning to **figure 2**, a rule template **50** has a statement **52** of its application followed by a series of data element templates: data element template **54a** for North American format telephone numbers; data element template **54b** for international format telephone numbers; and data element template **54c** for toll free telephone numbers.

If the domain of the application(s) to be screened is known to be that of product catalogs, then there will be rule templates written for data elements specific to product catalogs, such as Universal Pricing Codes (UPC). Similarly, for travel booking type applications, there will be rule templates written for data elements specific to travel booking, such as international airport codes: If the nature of the specific application to be screened is known, there will be rule templates specific to that application, such as the necessary format for a User ID.

Over and above any of the foregoing rule templates that may be written, the rule developer will write abstract rule templates for data elements not matched by any of the foregoing more specific templates. (Thus, the statement of application of the abstract rule template is that they are for data elements not otherwise matched). The data element templates for this rule template may include:
- A numeric data template
- An alphabetic data template
- An alphanumeric data template
- A printable-ASCII characterstring template
- A general ASCII characterstring template
- A UTF-8 characterstring template
- A UCS-16 characterstring template

These data templates have been ordered from more specific to least specific, for reasons that will become apparent hereinafter. Indeed, more generally, for any rule template, where the format of some of the data templates of the rule template are more specific than others, the data templates are ordered from most specific to least specific.

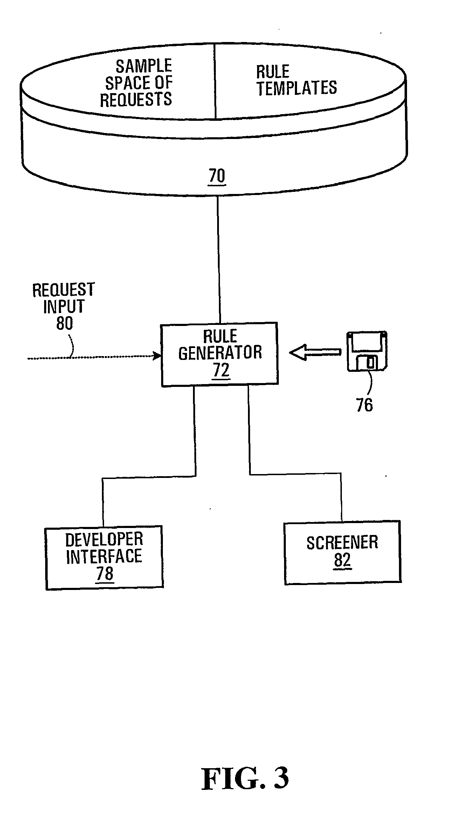

With reference to **figure 3**, rule templates for domains or for commonly found data elements may be written in advance and stored in a database **70** indexed in some appropriate manner. The database may be connected to a rule generator **72** which may be a general purpose computer programmed with rule generation software embodied in a computer readable medium **76,** such as a computer diskette, a read-only memory (ROM) chip, or a file downloaded from a remote source. The rule generator is also connected for communication with a developer interface **78** and with a screener **82;** the rule generator may receive data over communication line **80.** Database **70** stores a sample space of HTTP requests intended for one or more computer applications to be screened. The requests of the sample space are either part of computer packets addressed to the application(s) requiring screening rules or have been stripped out of such computer packets. The requests of the sample space may be received on communication line **80** and accumulated by the database into the sample space. The sample space of requests is assumed to represent legitimate uses of the one or more applications. Thus, the sample space is typically generated before requests are received from an untrusted source.

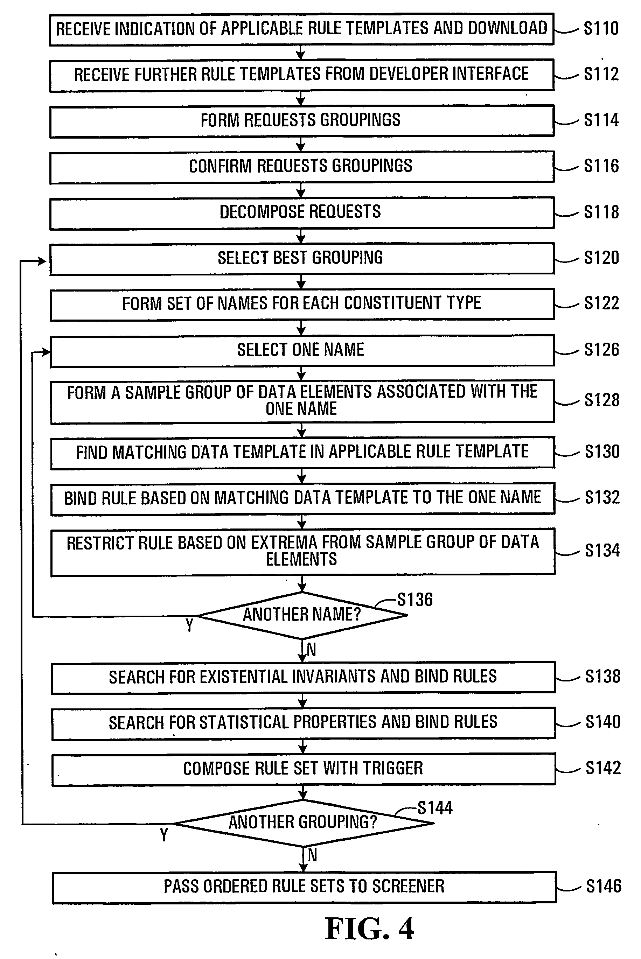

With reference to **figure 4**, which illustrates the operation of the rule generator **72,** in order to create rules for the application(s) requiring screening, a rule developer, through interface **78,** may indicate to the rule generator **72** appropriate rule templates in the database **(S110)**. Additionally, the developer may construct further rule templates that are specific to the application(s) to be screened and pass these to the rule generator through interface **78 (S112).**

The rule generator **72** then groups the HTTP requests **(S114).** Grouping is accomplished in a hierarchical fashion, that is, initially HTTP requests meeting a first criterion are grouped. The residue of HTTP requests not meeting the first criterion is then grouped according to a second criterion and the residue of that grouping is grouped by a third criterion, and so on. The grouping criteria are applied in the order of their ability to group the HTTP requests in a way that promotes the matching of data elements in a group of requests with data templates in the rule templates. In HTTP requests, each data element is typically associated with a name (as described hereinbefore in conjunction with **figures 1A** to **1D).** And in any one application, although different parts of the application will be addressed with different URIs, any unique name in the application will be associated with data elements having a set format. Thus, if the groupings can be such that there are plural instances of a unique name, there will be a like plurality of instances of data elements having the same format, thus promoting the matching with a data template. The hierarchical grouping process therefore results in groupings that are ordered from those having a higher probability of producing matchings to those with a lower probability of producing matchings.

The requests within the sample space are first formed into collections such that each collection comprises all the requests for a given unique URL. These collections are then grouped in order to promote accuracy in the generation of rules. All further grouping operations act upon these collections.

In order to promote rapid processing, grouping of requests is first performed on the basis of properties of requests which are observable solely through examination of the unique request URI corresponding to each collection, i.e., without examination of the Headers, Cookies, body, Method or HTTP version of requests within the collection.

The first criteria for grouping requests may be type indicators, such as the filename extension within the URI pathname. Thus, for example, the following (highest order) groupings may be formed:
- a grouping for HTTP requests with URIs having known "image" filetypes, which are represented by filename extensions including extensions including ".gif', ".jpg", ".jpeg", ".png";
- a grouping for HTTP requests with URIs having known "HTML/CSS" filetypes, which are represented by filename extensions including ".htm", ".html", ".css";
- a grouping for HTTP requests with URIs having known "client-side script" filetypes, which are represented by filename extensions including ".js";
- a grouping for HTTP requests with URIs having known "dynamic content" filetypes, which are represented by filename extensions including ".jsp", ".asp", ".pl", ".php"; and
- a grouping for HTTP requests with URIs having any filetype represented by an otherwise unrecognized filename extension occurring for the URI of more than a threshold number of HTTP requests within the sample space.

For the residue of requests not grouped by application of the first criteria, a second order grouping criteria is applied. This second criteria is the directory name prefix portions of the unique URI pathnames. Thus, for example, the following groupings may be formed:
- a grouping for HTTP requests having URIs with the prefix URI pathname "/images/";
- a grouping for HTTP requests having URIs with the prefix URI pathname "/scripts"; and
- a grouping for HTTP requests having URIs with any pathname prefix encountered in more than a threshold number of the residual HTTP requests.

Optionally, the residue of requests not grouped by either the first or the second criteria may be grouped according to patterns found within the URI of the requests. For example, all URIs with the substring "online/banking/application" may be grouped together. Any residue may be grouped according to the length of the URI in the remaining HTTP requests. For example, all URIs over 1000 characters in length may be grouped together.

For any residue remaining, the collection of requests for each unique URI is then examined, and invariants (i.e. properties that are invariant across all the requests in any one collection) are sought. Additional grouping of collections may then be performed on the basis of these invariants. These invariants may be sought first in the content type of the body of the requests, then in the size of the requests, then in the Method of the requests, and lastly in any other properties of the requests. For example, the following groupings may be formed based on the content type:
- a grouping for collections of requests, where the requests of each of the collections have an invariant content-type "application/x-www-form-urlencoded";
- a grouping for collections of requests, where the requests of each of the collections have an invariant known content-type representing HTML form submissions, including "application/x-www-form-urlencoded" and "multipart/form-data";
- a grouping for collections of requests, where the requests of each of the collections have an invariant unknown content-type, where the number of requests represented in the collections exceed a threshold number of requests within the sample space.

For any residue, additional grouping may then be performed on the basis of the request headers. For example, the following groupings may be formed based on the request headers:
- a grouping for collections of requests, where the requests of each of the collections have a Transfer Encoding ("TE") header and where the value for the TE header is invariant (i.e., the same) for all requests in the grouping;
- a grouping for collections of requests, where the requests of each of the collections have a "User-Agent" header and where the value for the User-Agent header is invariant for all requests in the grouping;
- a grouping for collections of requests, where the requests of each of the collections have an "Accept-Language" header and where the value for the Accept-Language header is invariant for all requests in the grouping;
- a grouping for collections of requests, where the requests of each of the collections have an invariant header value for any given header where the number of requests represented in the collections exceed a threshold number of requests within the sample space.

For any residue, the following groups may be formed based on request size:
- a grouping for collections of requests, where the requests of each of the collections have an invariant body size over 1000 bytes;
- a grouping for collections of requests, where the requests of each of the collections have over 500 bytes of headers.

For any residue, the following groupings may be formed based on the request Method:
- a grouping for collections of requests, where the requests of each of the collections have a PUT Method;
- a grouping for collections of requests, where the requests of each of the collections have a HEAD or GET Method.

Lastly, any remaining reside may be grouped based on any other invariant properties of the requests within each collection. This is the lowest order grouping criteria.

The ruler generator **72** may then present the groupings to the developer interface 78 in order to allow the rule developer to break any grouping apart to form two or more groupings or coalesce any two or more groupings into a grouping **(S116).**

The requests within each grouping are then decomposed into their constituents **(S118).** With HTTP requests, these constituents include: Method, URI, GET fields (URI parameters), HTTP version, Headers, Cookies, url-encoded POST fields, form multipart encoded POST fields, and SOAP elements.

Next, for each grouping **(S120, S144)**, for each type of constituent (i.e., GET fields, Headers, Cookies, etc.), the rule generator **72** forms a set of all constituent names (i.e., a set of all constituent names appearing in one or more requests within the grouping) (**S122**). For each name in the set **(S126, S136)**, the sample group of associated data elements is formed where each data element is associated with an instance of the name (**S128**).

The data templates of applicable ones of the selected rule templates are then applied to each sample group of data elements in order to find a matching data template **(S130).** For example, the **figure 2** rule template for telephone numbers is only potentially applicable to a data element in a body of a request (i.e., in a URI-encoded POST field, a multi-art encoded POST field, or a SOAP element) or in a GET field (URI parameter). Therefore, this rule template is applicable only where the HTTP constituent type is a URL-encoded field, a multipart-encoded field, or a SOAP element in the body or the URI parameters.

In the situation where a rule template has data element templates of greater to lesser specificity, a data element that matches a data element template of lesser specificity may also match a data element template of greater specificity. As aforenoted, the data element templates of such a rule template are organised from greater to lesser specificity in a rule template. With such an organisation, the rule generator **72** may search for a matching data element template beginning with templates of greater specificity and terminate the search upon finding the first data element template that matches the format of the sample group of data elements.

It will be recollected that in any one computer application any unique name in the application will be associated with data elements having the same format. Thus, a name in a set of names in a group of requests will normally be associated with data elements having an identical format. There is also the possibility of the same name being used in one group of requests in association with data elements of different formats (normally due to the identical name having been used in different computer applications). In such a situation, a sample group of data elements might only be declared to match one of the data element templates in the aforedescribed abstract rule template. Such matches may be flagged to the rule developer (via interface **78)** to allow a modification of the request groups in order to improve matching.

When a sample group of data elements matches a data element template, the corresponding constituent type name is bound to a rule requiring that each instance of the name of that constituent type have an associated data element according to the matching data element template **(S132).** It will be appreciated that such a rule is a simple universal rule in that it applies to all elements of that constituent type.

By way of example, it may be that a sample group of data elements associated with the name "telno" in the body of the request matched the North American telephone number format of (xxx) xxx-xxxx. In such case, a rule would be created that states: For all requests, where a body name is "telno", the associated data element must have the format (xxx) xxx-xxxx.

The bound simple universal rule may be restricted in the following ways:
- The rule may be assigned a minimum data value length (in characters or bytes) and a maximum data value length (in characters or bytes), based on the extrema in the sample group of data elements from which it was generated;
- when the data element values are of numeric type, the rule may be assigned a minimum numeric data value and a maximum numeric data value, based on the extrema in the sample group of data elements from which it was generated (S134).

The rule generator **72** may then examine each grouping of HTTP requests for existential invariants. For example, the rule generator may look for named elements of any type which never fail to exist (i.e., a simple existential invariant), and/or element types which always exist in a specific number (i.e., a complex existential invariant). For each existential invariant, a rule stipulating a requirement for the existence of that entity (or that number of entities) is bound to the grouping, creating a bound existential rule **(S138).** For example, the rule generator may note that every request in a grouping of HTTP requests has a Cookie named "SessionID". In such instance, the rule generator may establish a simple existential rule requiring a Cookie named "SessionID" for any HTTP request falling into that grouping (i.e., any HTTP request having the URI, header, or other feature that forms the basis for the grouping). Or the rule generator may note that every request in a grouping has between three and five POST fields with numeric values. In such instance, the rule generator may establish a complex existential rule requiring between three and five POST fields with numeric values for any HTTP request falling into that grouping

Next, each grouping of HTTP requests may be examined for statistical properties. For each statistical invariant, a rule stipulating a requirement for that statistical property is bound to the URI grouping, creating a bound statistical rule **(S140).** For example, a statistical rule might be "No more than 5% of the POST fields may have blank (empty) values".

Finally, the resulting bound rules (of all types, i.e. simple universal bound rules, existential bound rules, statistical bound rules) for each group are composed into a complete rule set. The rule set for a grouping has rules that are applicable for any subsequent HTTP requests that have a feature which is the same as the feature that formed the basis for the group. For example, a rule set may result from a group formed from HTTP requests with URIs having the filename extension ".gif'. In such case, this rule set is applicable for any subsequent HTTP request with a URI having the filename extension ".gif'. Thus, this feature is a "trigger" for the rule set. Hence, the common feature that formed the basis for each grouping is formed into a trigger condition for a rule set, and each rule (of each type) bound to the grouping becomes a condition that is added to the rule set **(S142).**

It will be apparent from the foregoing description of the manner in which groupings are formed that an HTTP request could satisfy the trigger condition of more than one rule set. However, as aforedescribed, the groupings are hierarchically ordered to generally progress from groupings having a higher probability of producing matchings to those with a lower probability of producing matchings. For processing efficiency, it is generally appropriate that any one request is screened by only one rule set. Thus, the rule sets are ordered in the same order in which the groupings are ordered. In consequence, screener **82**, on receiving a request, may search for a trigger condition satisfied by the request, beginning with higher order rule sets (which will have a higher probability of producing matchings). The first rule set in the ordered list of rule sets that is found to have a trigger condition which is satisfied by the request is the rule set which is applied to the request.

**Figure 5** illustrates a portion of an example rule set, expressed in human readable form. (In practice, rules for requests are typically stored in a table and may be symbolically expressed in a manner allowing finer distinctions than can conveniently be expressed in human readable form.) Turning to **figure 5,** a trigger **90** has a number of conditions **92** associated with it. Each condition is one of the rules bound to the group of HTTP requests that was established based on the URI feature that comprises trigger **90.**

The ordered rule sets may then be passed to screener **82** for screening subsequent requests to the application(s) **(S146).** Optionally, these subsequent HTTP requests may be stored to augment the sample space of requests in database **70.** In such case, the rule generator **72** may later process this larger sample space of requests in an attempt to generate improved rule sets.

Although the invention has been described in conjunction with requests that follow the HTTP protocol, it will be apparent that the teachings of the invention have application to requests that follow any other suitable protocol.

Other modifications will be apparent to those skilled in the art and, therefore, the invention is defined in the claims.

## Claims

1. A method for creating rule sets for screening application layer requests wherein application layer requests (10, 10', 10") from a sample space of application layer requests are grouped by a feature of said requests:
receiving a set of data templates (54a, 54b, 54c) applicable to each type of constituent (12, 14, 16, 18, 20, 12', 14', 16', 18', 20', 25', 12", 14", 16", 18", 25", 18a"', 25"') of said requests;
**characterised by:**
obtaining a rule set (Fig. 5) for each requests grouping by:
for each type of constituent of said requests, identifying names of said constituents (24', 24") and associated data elements (26', 26") found in requests of said each requests grouping;
for each name:
obtaining a sample group of data elements, each data element associated with an instance of said each name;
matching said sample group of data elements with a pre-defined data template; and
binding a rule (92) associated with said matching data template to said each name.

2. The method of claim 1 wherein said feature is a segment of a destination address indicator (14, 14', 14").

3. The method of claim 2 wherein said application layer requests are Hypertext Protocol (HTTP) requests and said destination address indicator is a Universal Resource Indicator (URI).

4. The method of claim 3 wherein said segment of said URI is a URI pathname extension.

5. The method of claim 4 wherein URI pathname extensions used for said grouping are pre-determined.

6. The method of claim 4 wherein some URI pathname extensions used for said grouping are pre-determined and each one of others is determined as a URI pathname extension used in the URI of a threshold number of said requests.

7. The method of claim 4 further comprising, for a residue of HTTP requests not grouped by said grouping, grouping requests of said residue by directory name prefix portions of URI pathnames of said residue.

8. The method of claim 7 wherein said directory name prefix portions used for said grouping are pre-determined.

9. The method of claim 7 wherein some of said directory name prefix portions used for said grouping are pre-determined and each one of others is determined as a directory name prefix portion used in the URI of a threshold number of said requests.

10. The method of claim 7 further comprising, for a second residue of HTTP requests not yet grouped, grouping requests of said second residue by string patterns within URI pathnames of said second residue.

11. The method of claim 10 further comprising, for a third residue of HTTP requests not yet grouped, grouping a sub-set of requests of said third residue, each request of said sub-set having a common property.

12. The method of claim 11 wherein said common property is a pre-determined content-type.

13. The method of claim 11 wherein said common property is one of a pre-determined content-type and a content-type used in a threshold number of said sub-set of requests.

14. The method of claim 1 further comprising:
for each name, determining a length of a longest data element in said set of data elements and binding a further rule to said each name stipulating a maximum permissible length of a data element as said length.

15. The method of claim 1 wherein, where said data elements in said set of data elements are numeric, determining a value of a largest valued data element in said set of data elements and a value of a smallest valued data element in said set of data elements and binding a further rule to said each name stipulating a maximum permissible value of a data element based on said value of said largest valued data element and a minimum permissible value based on said value of said smallest valued data element.

16. The method of claim 1 further comprising, for each requests grouping, searching for an element that is present in each request of said each request grouping and, on finding a given element that is present in each request of said each requests grouping, establishing an existential rule for said each requests grouping requiring the existence of said given element.

17. The method of claim 16 wherein, if said given element is found to be present in each request of said each requests grouping in at least a given number of instantiations, said existential rule for said each requests grouping is established to require the existence of said given element in said minimum number of instantiations.

18. The method of claim 1 further comprising, for each requests grouping, determining a statistical measure of a property of requests in said requests grouping and establishing a statistical rule for said each requests grouping based on said statistical measure.

19. The method of claim 1 further comprising, for each requests grouping, establishing a trigger for said rule set, said trigger comprising a feature by way of which said each requests grouping was formed, said trigger, when present, serving as a basis for invoking each said rule.

20. A system for creating a rule set for screening application layer requests, comprising:
means for grouping application layer requests (10, 10', 10") from a sample space of application layer requests by a feature of said requests;
means for receiving a set of data templates (54a, 54b, 54c) applicable to each type of constituent (12, 14, 16, 18, 20, 12', 14', 16', 18', 20', 25', 12", 14", 16", 18", 25", 18a"', 25"') of said requests; **characterised by**
means for obtaining a rule set (Fig. 5) for each requests grouping by:
for each type of constituent of said requests, identifying names of said constituents (24', 24") and associated data elements (26', 26") found in requests of said each requests grouping;
for each name:
obtaining a sample group of data elements, each data element associated with an instance of said each name;
matching said sample group of data elements with a pre-defined data template; and
binding a rule (92) associated with said matching data template to said each name.

21. A computer readable medium (76) containing computer executable instructions which, when loaded to a processor (72), adapt said processor to:
perform the method of claim 1.

## Patentansprüche

1. Ein Verfahren zum Erzeugen von Regelsätzen für Layer-Anfragen in Abschirmungsanwendungen, wobei Anwendungs-Layer-Anfragen (10, 10', 10") aus einem Probenraum von Anwendungs-Layer-Anfragen durch ein Merkmal der Anfragen gruppiert werden, [umfassend]:
Empfangen eines Satzes von Datenmasken (54a, 54b, 54c), die für jeden Typ von Bestandteilen (12, 14, 16, 18, 20, 12', 14', 16', 18', 20', 25', 121", 14'', 16", 18", 25", 18a"', 25"') der Anfragen anwendbar sind;
**gekennzeichnet durch**:
Erhalten eines Regelsatzes (Fig. 5) für jede Anforderungsgruppe **durch**:
für jeden Typ von Bestandteilen der Anfragen: Identifizieren von Namen der Bestandteile (24', 24") und der damit assoziierten Datenelemente (26', 26''), die in Anfragen der jeweiligen Anfragegruppe bestimmt werden;
für jeden Namen:
Erhalten einer Probengruppe von Datenelementen, wobei jedes Datenelement mit einem Auftreten des jeweiligen Namens assoziiert ist;
Abgleichen der Probengruppe der Datenelemente mit einer vordefinierten Datenmaske; und
Verknüpfen einer Regel (92), die mit der passenden Datenmaske für jeden Namen assoziiert ist.

2. Das Verfahren nach Anspruch 1, wobei das Merkmal ein Segment des Zieladressindikators (14, 14', 14") ist.

3. Das Verfahren nach Anspruch 2, wobei die Anwendungslayeranforderungen Hypertextprotokoll (HTTP, Englisch: Hypertext Protocol)-Anforderungen und der Zieladressindikator ein Universalquellenindikator (URI, englisch: Universal Resource Indicator) ist.

4. Das Verfahren nach Anspruch 3, wobei das Segment der URI eine URI Pfadnamen-Alonge (Englisch: Pathname Extension) ist.

5. Das Verfahren nach Anspruch 4, wobei die URI für jede Gruppierung verwendete Pfadnamen-Alonge vorbestimmt ist.

6. Das Verfahren nach Anspruch 4, wobei einige für die Gruppierung benutzte URI Pfadnamen-Alongen vorbestimmt sind und jeweils eine der anderen bestimmt ist als eine URI Pfadnamen-Alonge, die in der URI einer Schwellenzahl der Anforderungen verwendet wird.

7. Das Verfahren nach Anspruch 4, ferner umfassend, für einen Rest von HTTP Anforderungen, die nicht durch die Gruppierung gruppiert werden, Gruppieren von Anfragen des Rests durch Verzeichnisnamen-Präfixteile der URI Pfadnamen des Rests.

8. Das Verfahren nach Anspruch 7, wobei die für die Gruppierung benutzten Verzeichnisnamen-Präfixteile vorbestimmt sind.

9. Das Verfahren nach Anspruch 7, wobei einige der für die Gruppierung benutzten Verzeichnisnamen-Präfixteile vorbestimmt sind und jeweils eine der anderen als ein Verzeichnisnamen-Präfixteil, in der die URI einer Schwellenanzahl der Anforderungen benutzt wird, bestimmt wird.

10. Das Verfahren nach Anspruch 7, ferner umfassend für einen zweiten Rest von wiederum nicht gruppierten HTTP Anforderungen, Gruppieren der Anforderungen des zweiten Rests durch Zeichenkettenmuster innerhalb der URI Pfadnamen des zweiten Rests.

11. Das Verfahren nach Anspruch 10, ferner umfassend für einen dritten Rest von noch nicht gruppierten HTTP Anfragen: Gruppieren einer Teilmenge von Anfragen des dritten Rests, wobei jede Anfrage von jedem Rest eine gemeinsame Eigenschaft aufweist.

12. Das Verfahren nach Anspruch 11, wobei die gemeinsame Eigenschaft ein vorbestimmter Inhaltstyp ist.

13. Das Verfahren nach Anspruch 11, wobei die gemeinsame Eigenschaft eine der folgenden ist: ein vorbestimmter Inhaltstyps oder ein Inhaltstyp, der in einer Schwellwertanzahl der Teilmenge der Anforderungen verwendet wird.

14. Das Verfahren nach Anspruch 1, ferner umfassend:
für jeden Namen Bestimmen einer Länge eines längsten Datenelements in dem Satz von Datenelementen und
Verknüpfen einer weiteren Regel mit jedem Namen, der eine maximale erlaubbare Länge von Datenelementen als die Länge festlegt.

15. Das Verfahren nach Anspruch 1, wobei, [in Fällen] wo die Datenelemente in jedem Satz von Datenelementen in jedem Satz von Datenelementen numerisch sind, ein Wert eines größten, mit Wert versehenen Datenelements in dem Satz von Datenelementen und ein Wert eines Datenelements mit dem kleinsten Wert in dem Satz von Datenelementen bestimmt wird, und eine weitere Regel Verknüpfen mit jedem Namen, der einen maximalen erlaubbaren Wert von Datenelementen festsetzt, auf der Grundlage des Werts des größten, bewerteten Datenelements und eines minimalen, erlaubbaren Werts auf der Grundlage des Werts des kleinsten, mit Wert versehenen Datenelements.

16. Das Verfahren nach Anspruch 1, ferner umfassend, für jede Anforderungsgruppierung: Suchen nach einem in jeder Anfrage einer jeweiligen Anforderungsgruppierung vorhandenen Element, und beim Finden eines gegebenen, in jeder Anforderung einer jeweiligen Anforderungsgruppierung vorhandenen Elements, Aufstellen einer existentiellen Regel für die besagte jeweilige Anforderungsgruppierung, die die Existenz der gegebenen Elemente in einer minimalen Anzahl von Gruppierungen erfordert.

17. Das Verfahren nach Anspruch 16, wobei wenn das gegebene Element als vorhanden bestimmt wird, in jeder Anfrage einer jeweiligen Anfragengruppierung in mindestens einer gegebenen Anzahl von Auftreten die existentielle Regel für die jeweilige Anfragengruppierung aufgestellt wird, um die Existenz der gegebenen Elemente in einer minimalen Anzahl von Gruppierungen zu erfordern.

18. Das Verfahren nach Anspruch 1, ferner umfassend für jede Anforderungsgruppierung: Bestimmen eines statistischen Maßes einer Eigenschaft von Anforderungen in der Anforderungsgruppierung und Aufstellen einer statistischen Regel für die besagte jeweilige Anforderungsgruppierung auf der Grundlage des statistischen Maßes.

19. Das Verfahren nach Anspruch 1, ferner umfassend für jede Anforderungsgruppierung: Aufstellen eines Triggers für den Regelsatz, wobei der Trigger ein Merkmal umfasst, mittels dessen jede Anforderungsgruppierung ausgebildet wurde, wobei der Trigger, wenn er vorhanden ist, als eine Basis zum Hervorrufen von jeder der Regeln dient.

20. Ein System zum Beschaffen eines Regelsatzes für Layer-anfragen in Abschirmungsanwendungen, das System umfassend:
Mittel zum Gruppieren von Anwendungs-Layer-Anforderungen (10, 10', 10") aus einem Probenraum von Anwendungs-Layer-Anfragen durch ein Merkmal der Anfragen;
Mittel zum Empfangen eines Satzes von Datenmasken (54a, 54b, 54c), die für jeden Typ von Bestandteilen (12, 14, 16, 18, 20, 12' , 14', 16', 18', 20', 25', 12'', 14'', 16'', 18'', 25'', 18a''', 25''') der Anfragen anwendbar ist; **gekennzeichnet durch** Mittel zum Erhalten eines Regelsatzes (Fig. 5) für jede Anforderungsgruppierung **durch**:
für jeden Typ von Bestandteilen der Anforderungen, Identifizieren von Namen der Bestandteile (24', 24") und der assoziierten Datenelemente (26', 26''), die in Anforderungen von jeder Anforderungsgruppierung bestimmt werden;
für jeden Namen:
Erhalten einer Probengruppe von Datenelementen, wobei jedes Datenelement, das mit einem Auftreten des jeweiligen Namens assoziiert ist;
Angleichen des Probenraums von Datenelementen mit einer vorbestimmten Datenmatrize; und
Festsetzen einer Regel (92), die mit der abgeglichenen Datenmaske für jeden Namen verknüpft ist.

21. Ein computerlesbares Programm (76) enthaltend computerausführbare Anweisung, die, wenn sie in einen Prozessor (72) geladen werden, den Prozessor ausbilden zum:
Ausführen des Verfahrens nach Anspruch 1.

## Revendications

1. Procédé destiné à créer des ensembles de règles pour filtrer des demandes de couche application dans lequel les demandes (10, 10', 10") provenant d'un espace échantillonnal de demandes de couche application sont groupées selon une caractéristique desdites demandes :
une réception d'un ensemble de modèles de données (54a, 54b, 54c) applicables à chaque type de constituant (12, 14, 16, 18, 20, 12', 14', 16', 18', 20', 25', 12", 14", 16", 18", 25", 18a'", 25'") desdites demandes ;
**caractérisé par** :
l'obtention d`un ensemble de règles (figure 5) pour chaque groupement de demandes par :
pour chaque type de constituant desdites demandes, l'identification des noms (24', 24") desdits constituants et des éléments de données associés (26', 26") que l'on trouve dans des demandes de chaque dit groupement de demandes
pour chaque nom :
l'obtention d'un groupe d'échantillons d'éléments de données, chaque élément de données associé à une instance de chaque dit nom ;
une mise en correspondance dudit groupe d'échantillons d'éléments de données avec un modèle de données prédéfini ; et
la liaison d'une règle (92) associée audit modèle de données de mise en correspondance à chaque dit nom.

2. Procédé selon la revendication 1, dans lequel ladite caractéristique est un segment d'un indicateur d'adresse de destination (14, 14', 14").

3. Procédé selon la revendication 2, dans lequel lesdites demandes de couche application sont des demandes de protocole hypertexte (HTTP) et ledit indicateur d'adresse de destination est un indicateur de ressource universelle (URI : Universal Resource Indicator).

4. Procédé selon la revendication 3, dans lequel ledit segment dudit URI est une extension de chemin d'accès d'URI.

5. Procédé selon la revendication 4, dans lequel des extensions de chemin d'accès d'URI utilisées pour ledit groupement sont prédéterminées.

6. Procédé selon la revendication 4, dans lequel certaines extensions du chemin d'accès d'URI utilisées pour ledit groupement sont prédéterminées et chacune des autres est déterminée en tant qu'une extension du chemin d'accès d'URI utilisée dans l'URI d'un nombre seuil desdites demandes.

7. Procédé selon la revendication 4, comprenant en outre, pour des données résiduelles d'une demande HTTP non groupées par ledit groupement, l'étape consistant à grouper des demandes desdites données résiduelles selon des portions préfixes de noms de répertoire de chemins d'accès d'URI desdites données résiduelles.

8. Procédé selon la revendication 7, dans lequel lesdites portions préfixes de noms de répertoire utilisées pour ledit groupement sont prédéterminées.

9. Procédé selon la revendication 7, dans lequel certaines parmi lesdites portions préfixes de noms de répertoire utilisées pour ledit groupement sont prédéterminées et chacune parmi les autres est déterminée en tant qu'une portion préfixe de nom de répertoire utilisée dans l'URI d'un nombre seuil desdites demandes.

10. Procédé selon la revendication 7 comprenant en outre, pour des deuxièmes données résiduelles de demandes HTTP non encore groupées, l'étape consistant à grouper des demandes desdites deuxièmes données résiduelles selon des motifs de chaîne à l'intérieur des chemins d'accès d'URI desdites deuxièmes données résiduelles.

11. Procédé selon la revendication 10, comprenant en outre, pour des troisièmes données résiduelles de demandes HTTP non encore groupées, l'étape consistant à grouper un sous-ensemble de demandes desdites troisièmes données résiduelles, chaque demande dudit sous-ensemble ayant une propriété commune.

12. Procédé selon la revendication 11, dans lequel ladite propriété commune est un type de contenu prédéterminé.

13. Procédé selon la revendication 11, dans lequel ladite propriété commune est un parmi un type de contenu prédéterminé et un type de contenu utilisé dans un nombre seuil dudit sous-ensemble de demandes.

14. Procédé selon la revendication 1, comprenant en outre les étapes consistant à :
pour chaque nom, déterminer une longueur d'un élément de données le pus long dans ledit ensemble d'éléments de données et lier une autre règle à chaque dit nom, stipulant une longueur maximale admissible d'un élément de données en tant que ladite longueur.

15. Procédé selon la revendication 1, dans lequel, aux endroits où lesdits éléments de données dans ledit ensemble d'éléments de données sont numériques, on détermine une valeur d'un élément de données à valeur la plus grande dans ledit ensemble d'éléments de données et une valeur d'un élément de données à valeur la plus petite dans ledit ensemble d'éléments de données et on lit une autre règle à chaque dit nom stipulant une valeur maximale admissible d'un élément de données basé sur ladite valeur dudit élément de données à valeur la plus grande et une valeur minimale admissible basée sur ladite valeur dudit élément de données à valeur la plus petite.

16. Procédé selon la revendication 1, comprenant en outre, pour chaque groupement de demandes, l'étape consistant à rechercher un élément qui est présent dans chaque demande de chaque dit groupement de demandes et, lorsque l'on trouve un élément donné qui est présent dans chaque demande de chaque dit groupement de demandes, établir une règle existentielle pour chaque dit groupement de demandes exigeant l'existence dudit élément donné.

17. Procédé selon la revendication 16, dans lequel, si ledit élément donné se trouve être présent dans chaque demande de chaque dit groupement de demandes dans au moins un nombre donné d'instanciations, ladite règle existentielle pour chaque dit groupement de demandes est établie et exige l'existence dudit élément donné dans ledit nombre minimum d'instanciations.

18. Procédé selon la revendication 1, comprenant en outre, pour chaque groupement de demandes, les étapes consistant à déterminer une mesure statistique d'une propriété de demandes dans ledit groupement de demandes et établir une règle statistique pour chaque dit groupement de demandes basé sur ladite mesure statistique.

19. Procédé selon la revendication 1, comprenant en outre, pour chaque groupement de demande, les étapes consistant à établir un déclencheur pour ledit ensemble de règles, ledit déclencheur comprenant une caractéristique au moyen de laquelle chaque dit groupement de demandes a été formé, ledit déclencheur, lorsqu'il est présent, servant en tant que base pour invoquer chaque dite règle.

20. Système destiné à créer un ensemble de règles pour filtrer des demandes de couche application, comprenant :
un moyen destiné à grouper des demandes (10, 10', 10") de couche application provenant d'un espace échantillonnal de demandes de couche application selon une caractéristique desdites demandes ;
un moyen destiné à recevoir un ensemble de modèles de données (54a, 54b, 54c) applicables à chaque type de constituants (12, 14, 16, 18, 20, 12', 14', 16', 18', 20', 25', 12", 14", 16", 18", 25", 18a"', 25'") desdites demandes ; **caractérisé par**
un moyen destiné à obtenir un ensemble de règles (figure 5) pour chaque groupement de demandes par :
pour chaque type de constituants desdites demandes, l'identification des noms desdits constituants (24', 24") et des éléments de données associés (26', 26") que l'on trouve dans les demandes de chaque dit groupement de demandes ;
pour chaque nom :
l'obtention d'un groupe d'échantillons d'éléments de données, chaque élément de données étant associé à une instance de chaque dit nom ;
une mise en correspondance dudit groupe d'échantillons d'éléments de données avec un modèle de données prédéfini ; et
une liaison d'une règle (92) associée audit modèle de données de mise en correspondance à chaque dit nom.

21. Support lisible par ordinateur (76) contenant des instructions exécutables par ordinateur qui, lorsqu'elles sont chargées sur un puissance (72), adaptent ledit processeur pour :
effectuer le procédé selon la revendication 1.
